# EUROPÄISCHE PATENTSCHRIFT

(11) **EP 0 966 829 B1**
(45) Veröffentlichungstag und Bekanntmachung des Hinweises auf die Patenterteilung: **17.12.2003**
(21) Anmeldenummer: 98923989.2
(22) Anmeldetag: 11.03.1998
(51) Int. Cl.: H04M 1/65, H04N 1/00

(54) **DIGITALER ANRUFBEANTWORTER**
DIGITAL ANSWERING MACHINE
REPONDEUR TELEPHONIQUE NUMERIQUE

(30) Priorität: 11.03.1997 DE 19709973
(43) Veröffentlichungstag der Anmeldung: 29.12.1999
(73) Patentinhaber: SIEMENS AKTIENGESELLSCHAFT, 80333 München (DE)
(72) Erfinder: PFLAUM, Karl-Heinz, D-46397 Bocholt (DE)
(86) Internationale Anmeldenummer: DE9800718
(87) Internationale Veröffentlichungsnummer: WO98040999

(56) Entgegenhaltungen:
- US-A- 5 550 649

## Beschreibung

Die vorliegende Erfindung betrifft ein Telefon mit integriertem digitalem Anrufbeantworter. Insbesondere betrifft die Erfindung ein Telefon mit integriertem digitalem Anrufbeantworter, im folgenden auch vereinfacht als kombiniertes Telefon-/Anrufbeantwortergerät bezeichnet, mit dem neben Sprachinformationen auch Faxinformationen verarbeitet werden können.

Bekanntermaßen können über das Telefonnetz übertragenen Faxmitteilungen von Faxgeräten empfangen werden, die an eine gewöhnliche TAE-Telefonsteckdose angeschlossen werden und als Einzelgerät oder mit integriertem Telefon ausgestaltet sein können. Zudem sind bereits Geräte bekannt, bei denen neben der Fax- und Telefonfunktion auch bereits die Funktion eines digitalen Anrufbeantworters integriert worden ist. Ein derartiges multifunktionales Gerät ist beispielsweise das Telfax 890 oder das Telfax 840 AB der Anmelderin. Der Faxempfang mit derartigen Geräten ist unproblematisch, da eine über das Telefonnetz empfangene Faxmitteilung unmittelbar von dem Faxgerät ausgedruckt wird.

Aus der EP 0 693 845 A2 ist ein digitaler Telefonanrufbeantworter mit einer Sprachsteuerung bekannt, der aus einem digitalen Signalprozessor, einem Speicher zur Speicherung von Software zur Ausführung von Grund- und Sonderfunktionen, einem Speicher zur Sprachspeicherung, einer analogen Schnittstelle mit einem Analog/Digital-Digital/Analog-Wandler und damit verbundenem Lautsprecher und Mikrofon sowie einer Rechnerschnittstelle mit der zum Aufrufen und Starten von Grund- und Sonderfunktionen des Telefonanrufbeantworters eine Verbindung zu einem Mikrocontroller hergestellt wird, besteht.

Eine Alternative hierzu, ist der Empfang von Faxdaten mittels eines Computers. Will man jedoch mit einem Computer, beispielsweise einem Personal Computer, Faxe empfangen, so ist hierfür ein mit einer Faxfunktion ausgestatteter Modem erforderlich, welcher einerseits an das Telefonnetz und andererseits an eine serielle Schnittstelle des Computers angeschlossen wird. Der Modem wandelt die von dem Telefonnetz empfangenen analogen Telefon- bzw. Faxsignale in von dem Computer zu verarbeitetende digitale Signale um. Soll ein Fax gesendet werden, so werden die von dem Computer an den Modem übertragenen digitalen Signale ausgangsseitig in analoge Signale umgewandelt, die anschließend über das Telefonnetz an einen Empfänger übertragen werden. Ein derartiger sogenannter Fax-Modem arbeitet jedoch nicht selbständig, d.h. für den Faxempfang ist es erforderlich, daß der Computer eingeschaltet ist, um jederzeit empfangsbereit zu sein. Dies ist allerdings aufgrund des hohen Energiebedarfs des Computers nachteilig und daher nicht wünschenswert.

Das zuvor genannte Problem kann zum einen dadurch gelöst werden, daß der Fax-Modem mit einer erhöhten Funktionalität ausgestattet wird, die es dem Fax-Modem erlaubt, eingehende Fax-Anrufe entgegenzunehmen und entsprechend sogenannter Fax-Protokolle zu verarbeiten. Des weiteren ist der Fax-Modem mit einem Speicher ausgestattet, der die den eingehenden Faxmitteilungen entsprechenden Daten zwischenspeichert, so daß nach Einschalten eines an den Fax-Modem angeschlossenen Computers der Benutzer bei Bedarf die Daten in den Computer übertragen und die Faxmitteilung ausgeben kann. Bei dieser Lösung ist jedoch problematisch, daß in Bezug auf den Fax-Modem eine Reihe von zusätzlichen Hardware-Einheiten, wie beispielsweise eine Steuereinrichtung, ein Speicher oder eine Spannungsversorgung für den Pufferspeicher, vorgesehen werden muß, so daß nicht nur der Aufbau des Fax-Modems deutlich aufwendiger wird, sondern sich auch die Herstellungskosten des Fax-Modems erheblich verteuern.

Es wurde daher für das oben genannte Problem eine weitere Lösung vorgeschlagen, gemäß der zwischen dem Fax-Modem und den Telefonanschluß eine Einschaltlogik geschaltet ist, die eingehende Faxanrufe erkennt und bei Erkennen von Faxanrufen den mit dem Fax-Modem verbundenen Computer automatisch einschaltet. Nachteilig bei dieser Lösung ist jedoch, daß der Computer erst dann Faxinformationen verarbeiten kann, wenn er nach seinem Einschalten "hochgefahren" ist, d.h. betriebsbereit ist. Dies kann jedoch einige Zeit dauern, so daß sich das anrufende Faxgerät gegebenenfalls wieder ausschaltet, da es seine Faxdaten nicht übertragen konnte. Zudem wird durch das häufige Ein- und Ausschalten des Computers dessen Lebensdauer deutlich herabgesetzt.

Dazu ist aus US 5 550 649 ist eine Lösung bekannt, bei der ein Zusatzgerät an eine Telefonleitung angeschlossen wird und an das ein Telefon, ein Computer und ein Fernsehgerät angeschlossen werden kann. Dieses Zusatzgerät kann Faxe empfangen und versenden, ist mit einer Anrufbeantworterfunktion versehen und hat ein integriertes ComputerModem. Das Gerät ist mit einem ersten Speicher für die Speicherung von Sprachdaten und einem zweiten Speicher für die Speicherung der Fax-Daten ausgerüstet. Das Gerät schaltet erst dann den angeschlossenen Computer ein, wenn die Speicherkapazität des Sprach- oder Fax-Datenspeichers erschöpft ist, worauf die eingehenden Sprach- oder Faxdaten zum Computer geleitet werden, anstatt sie in den ersten und/oder zweiten voll belegten Speicher zu speichern.

Desweiteren ist aus DE 94 04 464 U 1 eine Telefonanlage mit einem automatischen Anrufbeantworter bekannt, die derart ausgestaltet ist, daß der Anrufbeantworter ein Gehäuse mit einem Diskettenlaufwerk umfaßt und im Telefongespräch enthaltene Fax-Signale digital auf eine im Diskettenlaufwerk eingelegte Diskette speichert. Zum Anzeigen und/oder Drucken der auf der Diskette gespeicherten Fax-Signale wird die Diskette in den eingeschalteten, mit einem angeschlossenen Drucker ausgerüsteten Computer eingelegt.

Der vorliegenden Erfindung liegt die Aufgabe zugrunde, ein Telefon mit integriertem Anrufbeantworter anzugeben, mit dem ohne großen technischen Aufwand zuverlässig Fax-Nachrichten empfangen werden können.

Diese Aufgabe wird durch ein Telefon mit integriertem digitalem Anrufbeantworter gemäß Anspruch 1 gelöst.

Erfindungsgemäß wird vorgeschlagen, ein herkömmliches Telefon mit integriertem digitalem Anrufbeantworter derart zu erweitern, daß mit diesem digitalen Anrufbeantworter ankommende Faxe empfangen, zwischengespeichert und die dem gespeicherten Fax entsprechenden Daten anschließend nach Einschalten eines Computers über eine geeignete Schnittstelle zu dem Computer übertragen werden. Da in kombinierten Telefon/Anrufbeantwortergerät ohnehin ein Speicher für die Anrufbeantworterfunktion vorgesehen ist, kann dieser Speicher ohne größeren technischen Aufwand erweitert bzw. die Faxdaten zusammen mit den Sprachinformationsdaten des Anrufbeantworters in ein und demselben Speicher gespeichert werden.

Der Vorteil der erfindungsgemäßen Lösung liegt darin, daß zur Realisierung des Faxempfangs mit einem kombinierten Telefon-/Anrufbeantwortergerät nur eine geringe schaltungstechnische Änderung erforderlich ist, so daß die Faxfunktion in bestehenden kombinierten Telefon/Anrufbeantwortergeräten mit geringem finanziellen Aufwand integriert werden kann. Da der Computer mit dem erfindungsgemäßen kombinierten Telefon/Anrufbeantwortergerät verbunden ist, können nach Einschalten des Computers automatisch sowohl die ankommenden Faxinformationen als auch die Sprachinformationen des Anrufbeantworters direkt an den Computer übertragen werden, sobald dieser betriebsbereit ist. Durch diese erfindungsgemäße Maßnahme ist die Aufzeichnungsdauer der digitalen Anrufbeanworterfunktion sowie der Pufferspeicher für die Faxfunktion nahezu unbegrenzt, da die entsprechenden Daten nicht mehr in dem digitalen Anrufbeantworter gespeichert bleiben werden müssen. Alternativ kann auch eine Schaltvorrichtung vorgesehen sein, die einerseits mit dem Computer und andererseits mit dem Speicher des erfindungsgemäßen digitalen Anrufbeantworters verbunden ist und die Belegung des Speichers überwacht. Ist der Speicher des digitalen Anrufbeantworters bis zu einem bestimmten Grad gefüllt, so schaltet diese Schaltvorrichtung automatisch den Computer ein und veranlaßt somit, daß sowohl die in dem Speicher gespeicherten Informationen als auch die nunmehr ankommenden Informationen direkt an den Computer übertragen werden, so daß der Speicher des digitalen Anrufbeantworters entlastet wird. Auf diese Weise kann sichergestellt werden, daß Faxinformationen während der Zeitdauer des Hochfahrens des Computers in dem Speicher des digitalen Anrufbeantworters zwischengespeichert werden und nicht verloren gehen können. Zudem muß zur Sicherung des Faxempfangs der Computer wesentlich seltener eingeschaltet werden als beim bekannten Stand der Technik, so daß die Lebensdauer des Computers nicht wesentlich beeinträchtigt wird. Ein weiterer Vorteil der vorliegenden Erfindung ist darin zu sehen, daß aufgrund der möglichen Verbindung zwischen dem Computer und dem erfindungsgemäßen digitalen Anrufbeantworter bzw. dem Telefon mit integriertem Anrufbeantworter Einstellungen des digitalen Anrufbeantworters bzw. des Telefons zentral, bequem und übersichtlich vom Computer aus durchgeführt und über die Schnittstelle des digitalen Anrufbeantworters übertragen werden können.

Die Erfindung wird nachfolgend unter Bezugnahme auf die beigefügte Zeichnung anhand eines bevorzugten Ausführungsbeispiels näher erläutert.

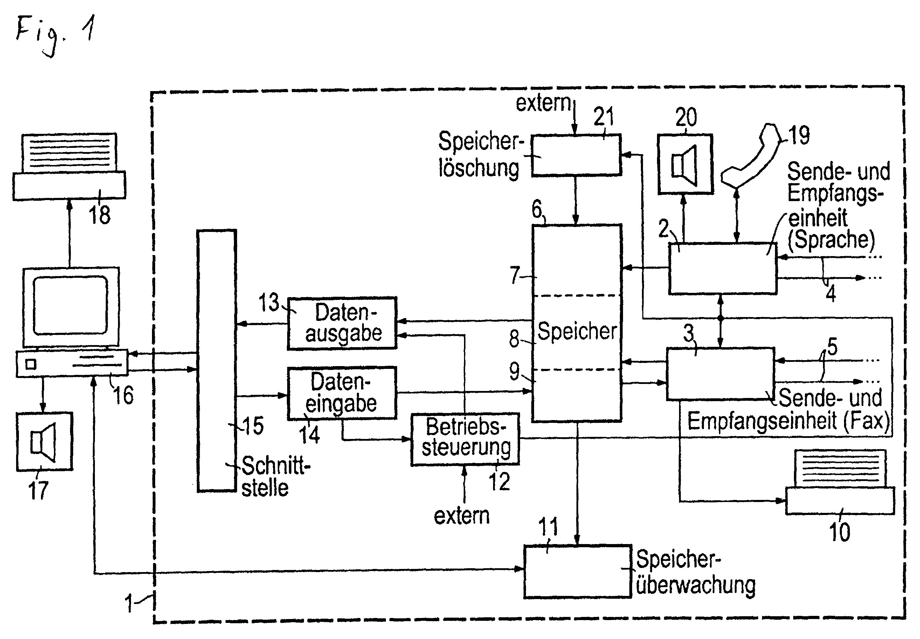

Figur 1 zeigt ein bevorzugtes Ausführungsbeispiel des digitalen Anrufbeantworters gemäß der vorliegenden Erfindung.

Das in Figur 1 gezeigte kombinierte Telefon-/Anrufbeantwortergerät 1 umfaßt zunächst eine Sende- und Empfangseinheit für das Senden und Empfangen von Sprachinformationen über eine Telefonleitung 4. Diese Sende- und Empfangseinheit dient sowohl zum Übertragen von den gewöhnlichen über einen Telefonhörer 19 ein- bzw. ausgegebenen Telefoninformationen als auch zur Ausgabe des Anrufbeantworter-Ansagetextes sowie zur Aufnahme, zum Abspeichern und Ausgeben von Mitteilungen eines Anrufers über einen Lautsprecher 20. Neben der Sende- und Empfangseinheit 2 für Sprachinformationen ist erfindungsgemäß eine Sende- und Empfangseinheit 3 für Faxinformationen vorgesehen, die in der Regel ankommende Faxinformationen anhand einer mitübertragenen Kennung identifiziert und die über eine Telefonleitungen 5 übertragenen Faxinformationen empfängt bzw. an ein anderes Faxgerät sendet. Das kombinierte Telefon-/Anrufbeantwortergerät 1 kann mit einem Drucker 10 ausgestattet sein, der unmittelbar die empfangen Faxinformationen ausdruckt. In der Regel werden die Telefonleitungen 4 und 5 identisch sein.

Um ankommende Faxe jedoch mit einem Computer 16, beispielsweise mit einem PC, bearbeiten zu können, ist erfindungsgemäß vorgesehen, ankommende Faxinformationen durch die Empfangseinheit zunächst in einem Speicher 6 zu puffern und anschließend über eine entsprechende Datenausgabevorrichtung 13 und eine Schnittstelle 15 an den Computer 16 auszugeben, nachdem dieser eingeschaltet worden ist. Dabei kann die Datenübertragung beispielsweise nach Vorliegen eines entsprechenden Anforderungsbefehls erfolgen. Der Speicher 6 kann getrennte Speichereinheiten 7, 8 bzw. 9 aufweisen, die zum Speichern von Sprachinformationen für den Anrufbeantworterbetrieb, zum Speichern von ankommenden Faxinformationen bzw. zum Speichern von abzusendenden Faxinformationen vorgesehen sind. Des weiteren ist eine Speicherüberwachung 11 vorhanden, die kontinuierlich die Belegung der einzelnen Speicherbereiche des Speichers 6 überwacht und beispielsweise automatisch ankommende Faxinformationen in den an sich für Sprachinformationen vorgesehenen Speicherbereich 7 speichert, wenn der für die Faxinformationen vorgesehene Speicherbereich 8 zu einem bestimmten Grad gefüllt ist. Alternativ kann jedoch ebenso vorgesehen sein, daß nicht zwischen den einzelnen Speicherbereichen 7, 8 und 9 unterschieden wird, sondern die einzelnen Informationen gemäß der Reihenfolge ihres Eintreffens nacheinander in die gemeinsame Speichervorrichtung 6 gespeichert werden. Die Sprach- und Faxinformationen werden zusammen mit einem entsprechenden Code oder einer Anfangs- und Endkennung abgespeichert, so daß nach Einschalten des Computers die gewünschten Informationen wieder aus dem Speicher 6 ausgelesen werden können. Die Speicherüberwachung 11 überwacht die Belegung des Gesamtspeichers 6 und, falls der Speicher 6 zu einem bestimmten Grad gefüllt ist, schaltet automatisch den Computer 16 ein, so daß nach Hochfahren des Computers 16 ankommende Sprach- und/oder Faxinformationen nicht mehr in dem Speicher 6 gespeichert, sondern direkt über die Datenausgabevorrichtung 13 und die Schnittstelle 15 in den Computer 16 geladen und dort verarbeitet werden können. Erfindungsgemäß können somit nicht nur Faxinformationenen, sondern auch Sprachinformationen der Anrufbeantworterfunktion an den Computer 16 übertragen werden, wo diese insbesondere mit Hilfe einer internen Soundkarte und einem Lautsprecher 17 wiedergegeben werden können. Durch die Kombination des in Figur 1 gezeigten digitalen Anrufbeantworters 1 mit dem Computer 16 können sowohl ankommende Sprachals auch Faxinformationen an den Computer 16 übertragen werden, so daß der Speicher des kombinierte Telefon-/Anrufbeantwortergerät 1 entlastet und eine nahezu unbegrenzte Kapazität zum Aufzeichnen der Sprach- bzw. Faxinformationen vorhanden ist.

Für den Fall, daß die Speicherüberwachung 11 beim Empfang der Sprach- bzw. Faxinformationen über die Sende- und Empfangseinheiten 2 bzw. 3 erkennt, daß der an der Schnittstelle 15 des kombinierten Telefon-/Anrufbeantwortergerätes 1 angeschlossene Computer 16 bereits eingeschaltet ist, kann auch vorgesehen sein, daß die empfangen Daten direkt ohne Pufferung in dem Speicher 6 über die Datenausgabeeinheit 13 und die Schnittstelle 15 an den Computer 16 übertragen werden, so daß der Speicher 6 weiter entlastet werden kann. Die von dem Computer 16 empfangenen Sprach- bzw. Faxinformationen können optisch oder akustisch ausgegeben werden. Insbesondere können die für die Anrufbeanworterfunktion erforderlichen Sprachinformationen entweder akustisch über eine in dem Computer 16 intern vorgesehene Soundkarte mit einem daran angeschlossenen Lautsprecher 17 oder optisch über den Monitor des Computers 16 oder einen daran angeschlossenen Drucker 18 ausgegeben werden. Dasselbe trifft auf die von dem Computer 16 empfangen Faxinformationen zu, wobei bespielsweise eine optische Anzeige der Faxinformationen möglich ist.

Durch den erfindungsgemäß vorgesehenen Anschluß des Computers 16 an die Schnittstelle 15 des kombinierten Telefon-/Anrufbeantwortergerätes 1 können Betriebseinstellungen der Telefon-, Anrufbeantworter- und/oder Faxfunktionen des in Figur 1 gezeigten kombinierten Telefon-/Anrufbeantwortergerätes 1 bequem und übersichtlich von dem Computer 16 aus durchgeführt werden. Zu diesem Zweck ist mit der Schnittstelle 15 des kombinierten Telefon-/Anrufbeantwortergerätes 1, die in der Regel durch eine serielle Schnittstelle gebildet wird, eine Dateneingabeeinheit 14 verbunden, die zum Empfang von Informationen oder Signalen vorgesehen ist, die von dem Computer 16 über die Schnittstelle 15 an das kombinierte Telefon-/Anrufbeantwortergerät 1 übertragen werden. Diese von dem Computer 16 übertragenen Informationen können beispielsweise Anweisungen zur Einstellung bestimmter Betriebsparameter des kombinierten Telefon-/Anrufbeantwortergerätes 1 umfassen. Derartige Anweisungen werden an eine Betriebssteuereinheit 12 weitergeleitet, die bestimmte Betriebsparameter der Datenausgabeeinheit 13 sowie der Sende- und Empfangseinheiten 2 und 3 einstellt. So kann beispielsweise über den Computer 16 und die Betriebssteuereinheit 12 die Aufzeichnungslänge für Sprachinformationen der Anrufbeantwortereinheit 2 oder das Format der über die Datenausgabeeinheit 13 und die Schnittstelle 15 an den Computer 16 zu übertragenden Daten eingestellt werden. Des weiteren kann über die Betriebssteuereinheit 12 an eine Löscheinheit 21 ein Löschsignal zum Löschen einzelner Bereiche des Speichers 6 bzw. des gesamten Speichers 6 übertragen werden. Auf die Betriebssteuereinheit 12 und die Löscheinheit 21 kann jedoch auch durch eine Bedienperson extern mit Hilfe entsprechend vorgesehener Tastfelder des kombinierten Telefon/Anrufbeantwortergerätes 1 eingegriffen werden. Somit ist ersichtlich, daß mit Hilfe der Verbindung des Computers 16 mit der Schnittstelle 15 des kombinierten Telefon/Anrufbeantwortergerätes 1 allgemein beliebige Betriebseinstellungen des in dem erfindungsgemäßen kombinierten Telefon-/Anrufbeantwortergeräte 1 implementierten Telefons, Anrufbeantworters oder der zur Verfügung gestellten Faxfunktion eingestellt werden können. So läßt sich beispielsweise auch über den Computer 16 das intern in dem kombinierten Telefon-/Anrufbeantwortergerät 1 für den Telefon- und Faxbetrieb gespeicherte digitale Telefonbuch editieren.

Schließlich können auch über den Computer 16 abzusendenden Faxinformationen an das kombinierte Telefon-/Anrufbeantwortergeräte 1 übertragen werden. Zu diesem Zweck wird das Layout eines abzusendenden Faxes sowie der zu übertragende Text an dem Computer 16 entworfen und nach Beendigung dieses Vorgangs die entsprechenden Daten über die Schnittstelle 15 an die Dateneingabeeinheit 14 des digitalen Anrufbeantworters 1 übertragen. Diese Daten werden in einem Speicherbereich 9 des Speichers 6 zwischengespeichert und an die Sende- und Empfangseinheit 3 weitergeleitet, die die von dem kombinierten Telefon-/Anrufbeantwortergerät 1 empfangenen digitalen Daten in entsprechende über die Übertragungsstrecke 5 zu übertragende analoge Faxinformationen umwandelt. Sollte es sich bei den Übertragungsleitungen 4 und 5 um digitale Übertragungsleitungen eines digitalen Telefonnetzes handeln, werden selbtverständlich die entsprechenden Sprach- und Faxinformationen von der entsprechenden Sende- und Empfangseinheit 2 bzw. 3 in digitaler Form empfangen und übertragen.

Durch die erfindungsgemäße Anschlußmöglichkeit eines Computers 16 an eine entsprechend vorgesehene Schnittstelle 15 des kombinierten Telefon-/Anrufbeantwortergerätes 1 wird somit gewährleistet, daß mit Hilfe der in Figur 1 gezeigten Vorrichtung nicht nur Faxinformationen mit dem Computer 16 empfangen, sondern auch von dem Computer 16 über das kombinierte Telefon-/Anrufbeantwortergerät 1 abgesendet werden können. Da ein kombinierten Telefon-/Anrufbeantwortergerät ohnehin Speicher für die Anrufbeantworterfunktion enthält, kann die in Figur 1 gezeigte Lösung für das der vorliegenden Erfindung zugrunde liegende Problem ohne großen technischen Aufwand realisiert werden, so daß die erfindungsgemäß angestrebte Faxfunktion ohne weiteres in bereits bestehende kombinierte Telefon-/Anrufbeantwortergeräte integriert werden kann. Zudem können durch den Anschluß eines Computers an das kombinierte Telefon-/Anrufbeantwortergerät beliebige Funktionen des in einem Gerät implementierten Telefons, Anrufbeantworters oder der zur Verfügung gestellten Faxfunktion zentral über den Computer gesteuert werden.

## Patentansprüche

1. Telefon mit integriertem digitalem Anrufbeantworter (1) mit folgenden Merkmalen:
a) erste Empfangsmittel (2) zum Empfangen von über eine erste Übertragungsstrecke (4) übertragenen Sprachinformationen,
b) zweite Empfangsmittel (3) zum Empfangen von über eine zweite Übertragungsstrecke (5) übertragenen Faxinformationen,
c) erste Sendemittel (2) zum Senden von über die erste Übertragungsstrecke (4) zu übertragenden Sprachinformationen,
d) eine fest integrierte Halbleiterspeichereinrichtung (6) zum Speichern der empfangenen Sprach- und Faxdaten,
e) Schnittstelleneinrichtung (15) zur Verbindung mit mindestens einer Datenverarbeitungseinrichtung (16),
f) Ausgabemittel (13), die zur Übertragung der Faxdaten an die Datenverarbeitungseinrichtung vorgesehen ist,
g) Speicherüberwachungseinrichtung (11) zur Aktivierung der Datenverarbeitungseinrichtung (16) für eine Übertragung von in der Speichereinrichtung (6) zwischengespeicherten oder aktuell über die Empfangsmittel (2, 3) empfangenen Sprach- und/oder Faxdaten bei Erreichen eines vorgegebenen Speicherfüllwertes.

2. Telefon mit integriertem digitalem Anrufbeantworter nach Anspruch 1,
**gekennzeichnet durch**
Mittel zur Übertragung, die derart ausgestaltet sind, dass in Fällen, in denen die Datenverarbeitungseinrichtung (16) aktiviert ist, eine Übertragung von empfangenen Sprach- und/oder Faxdaten an die Datenverarbeitungseinrichtung unter Umgehung einer Zwischenspeicherung eingerichtet wird.

3. Telefon mit integriertem digitalem Anrufbeantworter nach einem der vorherigen Ansprüche,
**dadurch gekennzeichnet,**
**dass** die Speichereinrichtung (6) einen Sprachspeicher (7) zum Zwischenspeichern von Sprachdaten und einen Faxspeicher (8) zum Zwischenspeichern von Faxdaten aufweist.

4. Telefon mit integriertem digitalem Anrufbeantworter nach dem Anspruch 3,
**gekennzeichnet durch**
Erfassungsmittel, die derart ausgestaltet sind, dass bei Erreichen eines ersten vorgegebenen Speicherfüllwertes des Sprachspeichers (7) eine Zwischenspeicherung von zu speichernden Sprachdaten im Faxspeicher (8) eingerichtet ist.

5. Telefon mit integriertem digitalem Anrufbeantworter nach dem Anspruch 3 oder 4,
**gekennzeichnet durch**
Mittel zum Zwischenspeichern, die derart ausgestaltet sind, dass bei Erreichen eines zweiten vorgegebenen Speicherfüllwertes des Faxspeichers (8) eine Zwischenspeicherung von zu speichernden Sprachdaten im Sprachspeicher (7) eingerichtet ist.

6. Telefon mit integriertem digitalem Anrufbeantworter nach einem der vorhergehenden Ansprüche,
**dadurch gekennzeichnet,**
**dass** das Ausgabemittel (13) auch zum Ausgeben der Sprachinformationen an die Datenverarbeitungseinrichtung (16) vorgesehen ist.

7. Telefon mit integriertem digitalem Anrufbeantworter nach einem der vorhergehenden Ansprüche,
**gekennzeichnet durch**
Ausgabemittel (13), die derart ausgestaltet sind, dass bei Vorliegen einer Anweisung entsprechend Informationen aus der Speichereinrichtung (6) ausgelesen und an die anschließbare Datenverarbeitungseinrichtung (16) übertragen werden.

8. Telefon mit integriertem digitalem Anrufbeantworter nach einem der vorhergehenden Ansprüche,
**gekennzeichnet durch**
Löschmittel (21) zum Löschen mindestens der in der Speichereinrichtung (6) gespeicherten Faxinformationen.

9. Telefon mit integriertem digitalem Anrufbeantworter nach einem der vorhergehende Ansprüche,
**gekennzeichnet durch**
a) dritte Empfangsmittel (14) zum Empfangen von abzusendenden Faxinformationen,
b) Sendemittel (3) zum Senden der von den dritten Empfangsmitteln (14) empfangenen Faxinformationen über die zweite Übertragungsstrecke (5).

10. Telefon mit integriertem digitalem Anrufbeantworter nach Anspruch 9,
**gekennzeichnet durch**
dritte Empfangsmittel (14), die derart ausgestaltet sind, dass sie die zu sendenden Faxinformationen von der Datenverarbeitungseinrichtung (16) über die Schnittstelleneinrichtung (15) empfangen.

11. Telefon mit integriertem digitalem Anrufbeantworter nach dem Anspruch 9 oder 10,
**gekennzeichnet durch**
weitere Speichermittel (9) zum Speichern der abzusendenden Faxinformationen.

12. Telefon mit integriertem digitalem Anrufbeantworter nach einem der vorhergehenden Ansprüche,
**gekennzeichnet durch**
Druckmittel (10) zum Ausdrucken der empfangenen Faxinformationen.

13. Telefon mit integriertem digitalem Anrufbeantworter nach einem der vorhergehenden Ansprüche,
**gekennzeichnet durch**
Einstellmittel (12), die derart ausgestaltet sind, dass sie den Betrieb des digitalen Anrufbeantworters gemäß vorgebbarer Einstellinformationen steuern.

14. Telefon mit integriertem digitalem Anrufbeantworter nach Anspruch 13,
**dadurch gekennzeichnet,**
**dass** die Einstellmittel (12) derart ausgestaltet sind, dass sie die Einstellinformationen von der an den digitalen Anrufbeantworter anschließbaren Datenverarbeitungseinrichtung (16) empfangen.

15. Telefon mit integriertem digitalem Anrufbeantworter nach einem der vorhergehenden Ansprüche,
**dadurch gekennzeichnet,**
**dass** die erste Übertragungsstrecke (4) und die zweite Übertragungsstrecke (5) dieselbe ist.

16. Telefon mit integriertem digitalem Anrufbeantworter nach einem der vorhergehenden Ansprüche,
**dadurch gekennzeichnet,**
**dass** die ersten Empfangsmittel (2) und die zweiten Empfangsmittel (3) dieselben sind.

## Claims

1. Telephone with integrated digital answering machine (1) having the following features:
a) first reception means (2) for receiving voice information transmitted via a first transmission link (4),
b) second reception means (3) for receiving fax information transmitted via a second transmission link (5),
c) first transmission means (2) for transmitting voice information which is to be transmitted via the first transmission link (4),
d) a permanently integrated semiconductor memory device (6) for storing the received voice and fax data,
e) interface device (15) for connecting to at least one data processing device (16),
f) output means (13) which is provided for transmitting the fax data to the data processing device,
g) memory monitoring device (11) for activating the data processing device (16) for the purpose of transmitting voice and/or fax data, which are buffer-stored in the memory device (6) or are currently being received via the reception means (2, 3), when a prescribed memory filling value is reached.

2. Telephone with integrated digital answering machine according to Claim 1,
**characterized by**
means for transmission which are designed such that, in cases in which the data processing device (16) has been activated, transmission of received voice and/or fax data to the data processing device with a bypass around buffer-storage is set up.

3. Telephone with integrated digital answering machine according to one of the preceding claims,
**characterized**
**in that** the memory device (6) has a voice memory (7) for buffer-storing voice data and a fax memory (8) for buffer-storing fax data.

4. Telephone with integrated digital answering machine according to Claim 3,
**characterized by**
detection means which are designed such that, when a first prescribed memory filling value for the voice memory (7) is reached, buffer-storage of voice data which are to be stored is set up in the fax memory (8).

5. Telephone with integrated digital answering machine according to Claim 3 or 4,
**characterized by**
means for buffer-storage which are designed such that, when a second prescribed memory filling value for the fax memory (8) is reached, buffer-storage of voice data which are to be stored is set up in the voice memory (7).

6. Telephone with integrated digital answering machine according to one of the preceding claims,
**characterized**
**in that** the output means (13) is also provided for outputting the voice information to the data processing device (16).

7. Telephone with integrated digital answering machine according to one of the preceding claims,
**characterized by**
output means (13) which are designed such that the presence of an instruction accordingly prompts. information to be read from the memory device (6) and to be transmitted to the connectable data processing device (16).

8. Telephone with integrated digital answering machine according to one of the preceding claims,
**characterized by**
erasure means (21) for erasing at least the fax information stored in the memory device (6).

9. Telephone with integrated digital answering machine according to one of the preceding claims,
**characterized by**
a) third reception means (14) for receiving fax information which is to be sent,
b) transmission means (3) for transmitting the fax information received by the third reception means (14) via the second transmission link (5).

10. Telephone with integrated digital answering machine according to Claim 9,
**characterized by**
third reception means (14) which are designed such that they receive the fax information to be transmitted from the data processing device (16) via the interface device (15).

11. Telephone with integrated digital answering machine according to Claim 9 or 10,
**characterized by** further memory means (9) for storing the fax information which is to be sent.

12. Telephone with integrated digital answering machine according to one of the preceding claims,
**characterized by**
printing means (10) for printing the received fax information.

13. Telephone with integrated digital answering machine according to one of the preceding claims,
**characterized by**
setting means (12) which are designed such that they control operation of the digital answering machine on the basis of prescribable setting information.

14. Telephone with integrated digital answering machine according to Claim 13,
**characterized**
**in that** the setting means (12) are designed such that they receive the setting information from the data processing device (16) which can be connected to the digital answering machine.

15. Telephone with integrated digital answering machine according to one of the preceding claims,
**characterized**
**in that** the first transmission link (4) and the second transmission link (5) are the same.

16. Telephone with integrated digital answering machine according to one of the preceding claims,
**characterized**
**in that** the first reception means (2) and the second reception means (3) are the same.

## Revendications

1. Téléphone avec répondeur (1) numérique intégré présentant les caractéristiques suivantes :
a) premiers moyens de réception (2) pour recevoir des informations vocales transmises au moyen d'un premier tronçon de transmission (4),
b) seconds moyens de réception (3) pour la réception d'informations de fax transmises au moyen d'un second tronçon de transmission (5),
c) premiers moyens d'émission (2) pour l'émission d'informations vocales à transmettre par le premier tronçon de transmission (4),
d) un dispositif de mémoire à semi-conducteurs (6) intégré de façon fixe pour la mémorisation des données vocales et de fax reçus,
e) un dispositif d'interface (15) pour la liaison avec au moins un appareil de traitement de données (16),
f) moyen de sortie (13), qui est prévu pour la transmission des données de fax au dispositif de traitement de données,
g) dispositif de contrôle de mémoire (11) pour l'activation du dispositif de traitement de données (16) pour une transmission de données vocales et/ou de fax mémorisées temporairement dans le dispositif de mémoire (6) ou reçus en cours par les moyens de réception (2, 3) lorsqu'on atteint un niveau de remplissage de mémoire prédéfini.

2. Téléphone avec répondeur numérique intégré selon la revendication 1,
**caractérisé par**
des moyens pour la transmission, qui sont conçus de telle sorte que, dans les cas où le dispositif de traitement de données (16) est activé, une transmission de données vocales et/ou de fax reçues au dispositif de traitement de données est mise en place en évitant un stockage temporaire.

3. Téléphone avec répondeur numérique intégré selon l'une quelconque des revendications précédentes,
**caractérisé en ce que**
le dispositif de mémoire (6) présente une mémoire vocale (7) pour le stockage temporaire de données vocales et une mémoire de fax (8) pour la mémorisation temporaire de données de fax.

4. Téléphone avec répondeur numérique intégré selon la revendication 3,
**caractérisé par**
des moyens d'enregistrement qui sont conçus de telle sorte qu'une mémorisation temporaire de données vocales à mémoriser est mise en place dans la mémoire de fax (8) lorsqu'on atteint un premier niveau de remplissage de mémoire prédéfini de la mémoire vocale (7).

5. Téléphone avec répondeur numérique intégré selon la revendication 3 ou 4,
**caractérisé par**
des moyens pour le stockage temporaire, qui sont conçus de telle sorte qu'une mémorisation temporaire de données vocales à mémoriser est mise en place dans la mémoire vocale (7) lorsqu'on atteint un second niveau de remplissage de mémoire prédéfini de la mémoire de fax (8).

6. Téléphone avec répondeur numérique intégré selon l'une quelconque des revendications précédentes,
**caractérisé en ce que**
le moyen de sortie (13) est prévu aussi pour l'envoi des informations vocales au dispositif de traitement de données (16).

7. Téléphone avec répondeur n umérique intégré selon l'une quelconque des revendications précédentes,
**caractérisé par**
des moyens de sortie (13) qui sont conçus de telle sorte que des informations sont extraites du dispositif de mémoire (6) et transmises au dispositif de traitement de données (16) pouvant être raccordé lorsqu'on a une directive allant dans ce sens.

8. Téléphone avec répondeur numérique intégré selon l'une quelconque des revendications précédentes,
**caractérisé par**
des moyens d'effacement (21) pour l'effacement au moins des informations de fax stockées dans le dispositif de mémoire (6).

9. Téléphone avec répondeur numérique intégré selon l'une quelconque des revendications précédentes,
**caractérisé par**
a) des troisièmes moyens de réception (14) pour la réception d'informations de fax à envoyer,
b) des moyens d'émission (3) pour l'émission des informations de fax reçues par les troisièmes moyens de réception (14) au moyen du second tronçon de transmission (5)

10. Téléphone avec répondeur numérique intégré selon la revendication 9,
**caractérisé par**
des troisièmes moyens de réception (14), qui sont conçus de telle sorte qu'ils reçoivent les informations de fax à envoyer du dispositif de traitement de données (16) au moyen du dispositif d'interface (15).

11. Téléphone avec répondeur numérique intégré selon la revendication 9 ou 10,
**caractérisé par**
d'autres moyens de mémorisation (9) pour la mémorisation des informations de fax à envoyer.

12. Téléphone avec répondeur numérique intégré selon l'une quelconque des revendications précédentes,
**caractérisé par**
des moyens d'impression (10) pour l'impression des informations de fax reçues.

13. Téléphone avec répondeur numérique intégré selon l'une quelconque des revendications précédentes,
**caractérisé par**
des moyens de réglage (12), qui sont conçus de telle sorte qu'ils contrôlent le fonctionnement du répondeur numérique selon des informations de réglage prédéfinissables.

14. Téléphone avec répondeur numérique intégré selon la revendication 13,
**caractérisé en ce que**
les moyens de réglage (12) sont conçus de telle sorte qu'ils reçoivent les informations de réglage du dispositif de traitement de données (16) pouvant être raccordé au répondeur numérique.

15. Téléphone avec répondeur numérique intégré selon l'une quelconque des revendications précédentes,
**caractérisé en ce que**
le premier tronçon de transmission (4) et le second tronçon de transmission (5) sont un seul et même tronçon.

16. Téléphone avec répondeur numérique intégré selon l'une quelconque des revendications précédentes,
**caractérisé en ce que**
les premiers moyens de réception (2) et les seconds moyens de réception (3) sont les mêmes.
